# EUROPEAN PATENT APPLICATION

(11) **EP 2 768 234 A1**
(43) Date of publication of application: **20.08.2014**
(21) Application number: 12871669.3
(22) Date of filing: 27.11.2012
(51) Int. Cl.: H04N 21/4788

(54) **METHOD, DEVICE AND SYSTEM FOR DISPLAYING INTERACTION MESSAGES**

(30) Priority: 22.03.2012 CN 201210079291
(71) Applicant: Huawei Technologies Co., Ltd, Shenzhen, Guangdong 518129 (CN)
(72) Inventor: JIANG, Haijun, Shenzhen, Guangdong 518129 (CN)
(74) Representative: Maiwald Patentanwalts GmbH
(86) International application number: PCT/CN2012/085340
(87) International publication number: WO 2013/139138

(57) **Abstract**

The present invention discloses a method for displaying an interactive message. The method includes: acquiring social network site picture in picture (SNS PIP) configuration information; logging in to a social network site server according to the SNS PIP configuration information; acquiring a user contact message by detecting the SNS server; parsing the contact message; and displaying the contact message in a PIP window on a user terminal by invoking a picture in picture (PIP) interface provided by a media playback platform. This method enables a user to obtain an SNS contact message in a timely manner on a content playback page. The present invention further provides an apparatus and a system for displaying an interactive message.

## Description

This application claims priority to Chinese Patent Application No. 201210079291.9, filed with the Chinese Patent Office on March 22, 2012 and entitled "METHOD, APPARATUS, AND SYSTEM FOR DISPLAYING INTERACTIVE MESSAGE", which is incorporated herein by reference in its entirety.

### TECHNICAL FIELD

This invention relates to communication technologies, and in particular, to a method, an apparatus, and a system for displaying an interactive message in a social network site (Social Network Site, SNS).

### BACKGROUND

Internet Protocol Television (Internet Protocol Television, IPTV) is a technology that provides multiple interactive services such as digital television for home users by using a broadband cable television network and by integrating multiple technologies, such as the Internet, multimedia, and communications. A user can enjoy the IPTV service at home in two manners: (1) a computer, (2) a set top box + an ordinary television set. The IPTV service also provides picture in picture (Picture in Picture, PIP) and picture in graphics (Picture in Graphics, PIG) functions. The PIP function is provided by a video receiving terminal or a similar device. While a video receiving terminal (such as a television set or a computer monitor) displays a channel in a full-screen main window, another one or more small windows may also be displayed at a specified position for playing other content. However, generally, only the sound corresponding to the channel played in the main window is played. An application scenario of the PIP function generally includes the following: While a live channel is played in the main window, current content of another live channel is browsed in another small window (also called a PIP window or a PIG window) and switching between the channel in the main window and the channel in the small window can be performed if required; or another content or an advertisement is browsed in the small window while the channel content in the main window is in a buffering process. An application scenario of the PIG function is similar to that of the PIP function. A difference lies in that the PIP function plays a video in the main window whereas the PIG function displays an electronic program guide (Electronic Program Guide, EPG) page in the main window. In the scenario of the PIG function, the sound corresponding to the channel in the small window is played. The PIG function is a specific application scenario of the PIP function and mainly used by a user to watch a video in the small window while browsing an electronic program menu.

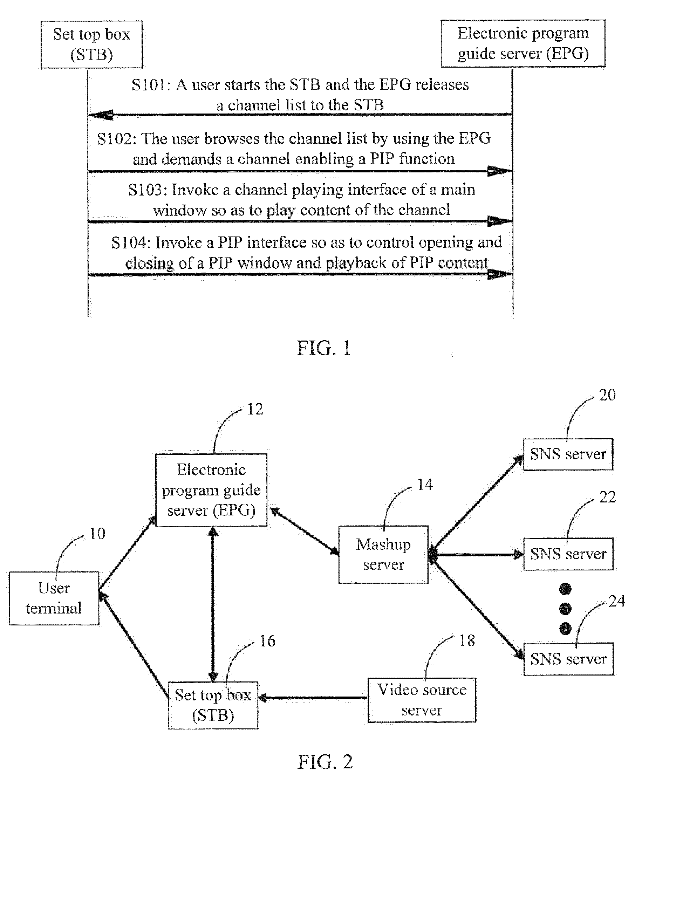

FIG. 1 shows a process of the PIP function provided in an existing IPTV service. S101: After a user starts an STB, an electronic program guide server releases a channel list to the STB; S102: The user browses the channel list by using the EPG server and demands a channel supporting the PIP function; S103: The STB invokes a channel playing interface (Application Programming Interface, API) of the main window by using the EPG server, so as to play content of the channel in the main window; S104: The STB invokes a PIP interface from the EPG server, so as to control opening and closing of the PIP window and playback of PIP content.

The inventor finds the following phenomena in the existing process: (1) The PIP function is specified when a channel is released and is applicable only to a scenario with relatively fixed PIP content. (2) The PIP window needs to be proactively controlled by a user and a current status is kept after the user triggers opening or closing of the PIP. The PIP window is always open or the PIP window is always closed until a next user operation. (3) Extended to a PIG scenario, the PIG content is also used to display relatively fixed content according to a relatively fixed principle in a same manner. For example, on the page for browsing the live channel menu, the PIG window plays the content of the first live channel on the current page by default; and on the page for browsing content on demand menu, the PIG window plays the first content on demand on the current page by default.

In addition, with SNS popularization in Internet applications, a user cannot dynamically learn SNS contact messages when watching an IPTV video on demand.

### SUMMARY

In view of this, a technical problem needs to be resolved by the present invention is as follows: A method, an apparatus, and a system for displaying an interactive message need to be provided, so that a user can obtain an SNS contact message in time on a content playback page.

For this purpose, embodiments of the present invention use the following technical solutions:

An embodiment of the present invention provides a method for displaying an interactive message, including: acquiring social network site picture in picture (SNS PIP) configuration information; logging in to a social network site (SNS) server according to the SNS PIP configuration information; acquiring a user contact message by detecting the SNS server; parsing the contact message; and displaying the contact message in a PIP window on a user terminal by invoking a picture in picture (PIP) interface provided by a media playback platform.

An embodiment of the present invention provides an apparatus for displaying an interactive message, including: an apparatus for acquiring social network site picture in picture (SNS PIP) configuration information; an apparatus for logging in to a social network site (SNS) server according to the SNS PIP configuration information; an apparatus for acquiring a user contact message by detecting the SNS server; an apparatus for parsing the contact message; and an apparatus for displaying the contact message in a PIP window on a user terminal by invoking a picture in picture (PIP) interface provided by a media playback platform.

An embodiment of the present invention provides a system for displaying an interactive message, including: an electronic program menu (EPG) server, a set top box (STB), and a mashup (Mashup) server, where the EPG server is configured to provide a configuration page for a user terminal to set social network site picture in picture (SNS PIP) configuration information and configured to automatically log in to one or more SNS servers according to the SNS PIP configuration information by using the Mashup server when the STB is started; the Mashup server is configured to detect a contact message on an SNS server in real time or regularly and pushes the detected contact message to the EPG server, and the EPG server parses the contact message and invokes a PIP interface provided by the STB to request display of the contact message; and the STB is configured to display the contact message in a PIP window on the user terminal for the user terminal.

An embodiment of the present invention provides a system for displaying an interactive message, including: a media playback platform and a mashup (Mashup) server, where the media playback platform further includes a picture in picture (PIP) interface and a social network site picture in picture (SNS PIP) configurator,
the SNS PIP configurator on the media playback platform is configured to store SNS PIP configuration information set by a user terminal and is used by the media playback platform to automatically log in to one or more SNS servers according to the SNS PIP configuration information by using the Mashup server, and
the Mashup server is configured to detect a contact message on an SNS server in real time or regularly and pushes the detected contact message to the media playback platform, and the media playback platform parses the contact message and invokes a PIP interface provided by the media playback platform to request display of the contact message.

Technical effects of the embodiments are as follows: The PIP technology enables a user to obtain an SNS contact message in a timely manner on any video playback page and implements dynamic prompt and preview of the SNS contact message. Therefore, the user can learn, in a timely manner, a message initiated by an SNS friend followed by the user in a condition in which use of another service is not affected.

### BRIEF DESCRIPTION OF DRAWING(S)

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for providing a PIP function in an IPTV service in the prior art;
FIG. 2 is an architecture of a system for displaying an interactive message in an IPTV service according to an embodiment of the present invention;
FIG. 3 is a schematic flowchart of a process in which a user terminal performs SNS PIP configuration by using an EPG server according to an embodiment of the present invention;
FIG. 4 is a schematic flowchart for acquiring an SNS message and displaying the SNS message by using PIP according to an embodiment of the present invention;
FIG. 5 is a diagram of an architecture of a system for displaying an interactive message according to an embodiment of the present invention; and
FIG. 6 is a flowchart of a method for displaying an interactive message according to an embodiment of the present invention.

### DESCRIPTION OF EMBODIMENTS

The following further details embodiments of the present invention with reference to accompanying drawings.

In a first specific embodiment of the present invention, in an IPTV service, a PIP technology enables a user to obtain an SNS contact message in a timely manner on any video playback page and implements dynamic prompt and preview of the SNS contact message. Therefore, the user can learn a message initiated by an SNS friend followed by the user in a condition in which use of another service is not affected. The SNS contact message involved in this embodiment of the present invention includes but is not limited to: a message from a friend of the user, a message from a family of the user, or a message from a colleague of the user. FIG. 2 is a diagram of an architecture of a system for displaying an interactive message. The system includes an EPG server 12, a Mashup server 14, an STB 16, and SNS servers 20, 22, and 24.

The EPG server 12 is configured to provide indexing and navigation for various services. An electronic program menu is a kind of channel navigation. A user terminal may select a desired channel or program based on the electronic program menu. In addition, the EPG server 12 may further provide various configuration pages for a user terminal 10 to configured a service with a personalized requirement.

The Mashup server 14 is configured to integrate more than two types of public Web applications to form one integrated application. For example, in this embodiment of the present invention, the IPTV service and an SNS service are integrated into a new service application. A user may further obtain friend information of the SNS service while using the IPTV service.

The STB 16 is configured to receive a digital television program and meanwhile has all broadcasting and interactive multimedia application functions, for example, receiving an EPG menu, high-speed data broadcasting, online software upgrade, Internet access, emails, and program decryption or descrambling.

The SNS servers 20, 22, and 24 are servers that provide various SNS applications, where the SNS applications include emails, online chatting on a network, microblog, or blog. Generally, different SNS servers provide different SNS applications.

The following further describes functions of devices in the system with reference to FIG. 2.

The user terminal 10 completes SNS PIP configuration on a configuration page provided by the EPG server 12. If the user terminal 10 chooses to enable the SNS PIP function, the EPG server 12 automatically logs in to one or more social network sites on the SNS servers 20, 22, and 24 by using the Mashup server 14 when the STB 16 is started, and the Mashup server 14 detects a contact message on the SNS servers 20, 22, and 24 in real time or regularly. When the user terminal 10 is playing video content, if the Mashup server 14 detects a contact message on the SNS server 20, 22, or 24, the Mashup server 16 pushes the contact message to the EPG server 12, and the EPG server 12 parses the contact message, obtains text content and a video link in the contact message and invokes an PIP interface provided by the STB 16 to request display of the text and video content. While the STB 16 is displaying the text content of the contact message in a PIP window for the user terminal 10, the STB 16 acquires video content corresponding to the video link from a video source server 18, displays the video content in the PIP window and acquires a video stream of a main window for display in the main window.

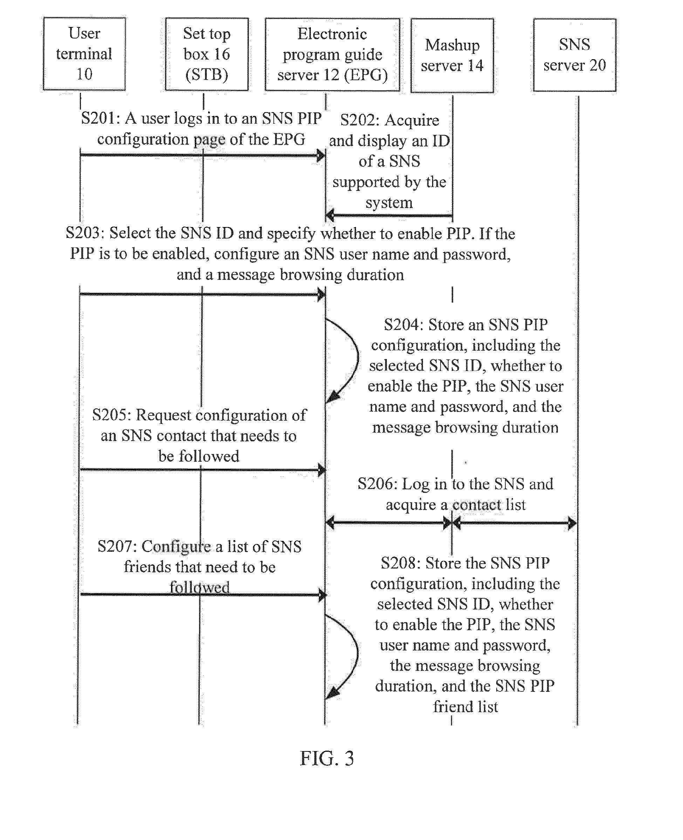

FIG. 3 is a schematic flowchart of a process in which a user terminal 10 performs SNS PIP configuration by using an EPG server.

Step S201: The user terminal 10 accesses an SNS PIP function configuration page provided by an EPG server 12 for the user terminal 10.

Step S202: The EPG server 12 acquires a social network site identifier (SNS ID) that has been integrated into a current IPTV system from a Mashup server 14, and optionally acquires description information corresponding to the SNS ID, and displays the SNS ID and the description information for the user terminal 10.

Step S203: The user terminal 10 selects, on a configuration page provided by the EPG server 12, an SNS ID for which PIP needs to be configured, and specifies whether to enable the PIP function. If the PIP function is to be enabled, the user terminal 10 configures an SNS user name and password that are corresponding to the SNS ID, so that subsequently the Mashup server 14 uses the SNS user name and password that are configured by the user terminal 10 to automatically log in to an SNS corresponding to the SNS ID. Optionally, to improve user experience, the user terminal 10 may further configured a message browsing duration, which is used for automatically closing a PIP window each time a display duration of the PIP window reaches the message browsing duration.

Step S204: The EPG server 12 stores the SNS PIP configuration information to a local position, that is, the EPG server 12, where the SNS PIP configuration information includes an SNS ID selected by the user terminal 10, whether to enable the PIP, the SNS user name and password, and the message browsing duration.

In addition, in another embodiment of the present invention, to avoid message flooding, in addition to enabling the PIP according to the SNS system configuration, a user may further specify a followed friend list in different SNSs, and the system displays a message only from a contact in the friend list. A specific configuration process is described in step S205 to step S208.

Step 5205: The user terminal 10 accesses the SNS PIP function configuration page provided by the EPG server 12 for the user terminal 10 to request configuration of information about an SNS contact that needs to be followed.

Step S206: The EPG server 12 automatically logs in to the corresponding SNS server 20 by using the Mashup server 14 and acquires the SNS contact list.

Step S207: The user terminal 10 selects and configures SNS friends followed by the user from the contact list to form an SNS friend list.

Step S208: The EPG server 12 stores the SNS PIP configuration information to a local position, that is, the EPG server 12, where the SNS PIP configuration information further includes an SNS PIP friend list.

Optionally, the EPG server 12 may store the SNS PIP information on the Mashup server 14. This manner avoids uploading of the configuration data each time the STB is started.

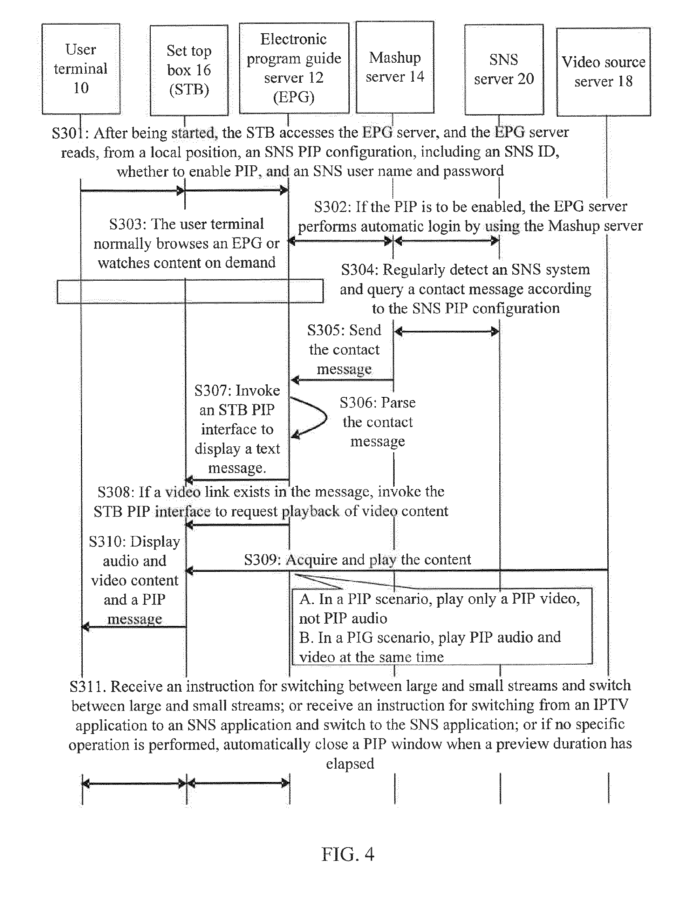

The following further describes a process for acquiring an SNS message and displaying the SNS message by using PIP with reference to FIG. 4.

Step S301: After a user terminal 10 and an STB 16 are started, the STB 16 accesses an EPG server. The EPG server reads, from a local position, an SNS PIP configuration corresponding to the user terminal 10, including an SNS ID preset by the user terminal 10, whether to enable PIP, an SNS user name and password. Optionally, the SNS PIP configuration may further include an SNS PIP friend list which indicates only a part of friends followed by the user terminal 10; and optionally, the SNS PIP configuration may further include a message browsing duration.

Step S302: A Mashup server 14 acquires the SNS PIP configuration. If the SNS PIP configuration indicates that PIP is to be enabled, the EPG server 12 automatically logs in to an SNS by using the Mashup server 14, and the Mashup server 14 accesses an SNS server corresponding to the SNS ID set by the user terminal 10 and implements automatic login by using a corresponding SNS user name and password. The use of the SNS login manner provided in the present invention is not perceived by the user terminal 10. In addition, the user terminal 10 does not need to enter by itself the user name and the password for login every time the SNS is used, which improves user experience.

Step S303: After logging in to the EPG server 12, the user terminal 10 perfonns normal service access, such as browsing an EPG menu or demanding a video.

Step S304: The Mashup server 14 regularly detects an SNS system and queries a contact message according to the SNS PIP configuration of a user; optionally, if the SNS PIP configuration includes an SNS PIP friend list, the Mashup server 14 detects a message only from a contact in the SNS PIP friend list to avoid message flooding.

Step S305: If detecting a new contact message, the Mashup server 14 pushes the contact message to the EPG server 12.

Step S306: The EPG server 12 parses the contact message and identifies a text message or a possibly included video link.

Step S307: The EPG server 12 invokes a PIP interface provided by the STB 16 to deliver the text message, so that the text message can be displayed in a PIP window on the user terminal 10.

Step S308: If a video link whose format is supported by the system exists in the parsed text message, the EPG server 12 invokes the PIP interface provided by the STB 16 to request display of the video by using the PIP.

Step S309: The STB 16 acquires video content corresponding to the video link from a video source server 18 and displays the video content in the PIP window, and acquires a video stream of a main window for display in the main window. The video source server 18 may be an internal stream media server in the IPTV or another server on the Internet. This step may further be divided according to a current specific scenario: In a PIP scenario, only a PIP video is played and PIP audio is not played; and in a PIG scenario, both a PIP video and PIP audio are played at the same time.

Step S310: The STB 16 displays the corresponding text and video message in the PIP window by using the user terminal 10 and displays content of the channel demanded by the user in the main window.

Optionally, in step S311, during PIP window preview, the user may switch between large and small streams by using specified keys on a remote control, that is, switch between the video stream in the main window and the content in the PIP window, or receive instructions for switching from an IPTV application to an SNS application and switching from a current page to an SNS application page, so as to perform a next operation and, after completing the operation, switch back to the original page by using a hot key; or if no specific operation is performed, the PIP window is automatically closed when the message browsing duration has elapsed.

The technical solution provided in the present invention is mainly targeted at scenarios in which point-to-point messages between friends are pushed and browsed, for a purpose of significantly improving user experience in an SNS service. A user terminal does not need to log in to an SNS proactively, and can learn an SNS contact message at any time during routine EPG browsing or video on demand. To avoid message flooding and meanwhile reduce system performance loss, the user terminal can independently configured SNSs followed by the user terminal and friends in different followed SNSs and performs PIP message prompt for a message only from a specified friend. The user terminal may further specify a PIP message browsing duration, so as to close a PIP window without a proactive operation; in addition, the user terminal supports switching between small and large PIP streams and switching between a current page and an SNS application.

The embodiments illustrated in FIG. 2 to FIG. 4 mainly focus on an IPTV solution and describe how to capture an SNS contact message in real time in a better manner and preview a text message and a video link in a PIP manner.

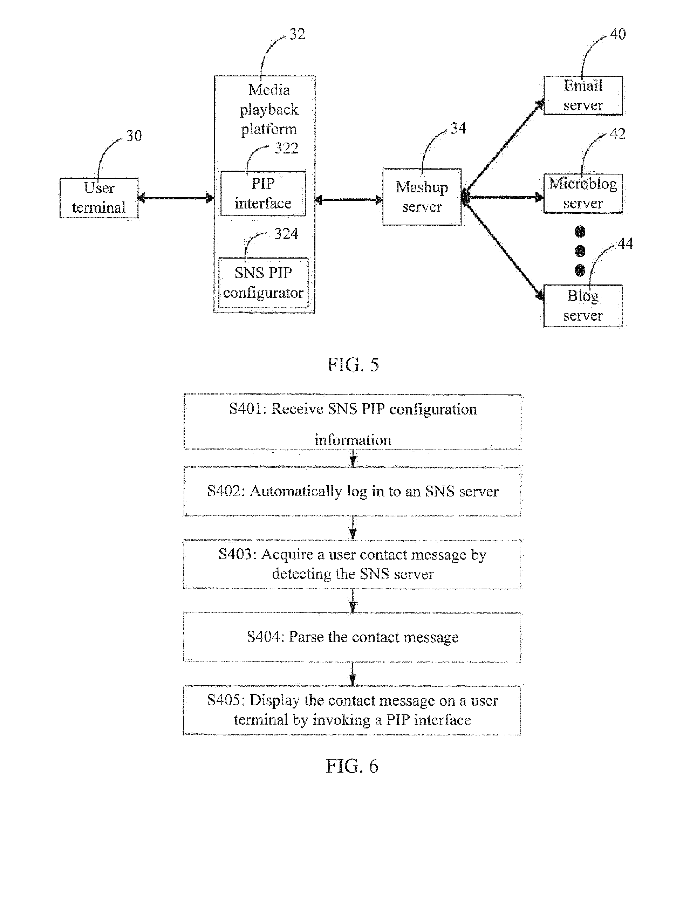

FIG. 5 is a diagram of an architecture of another system for displaying an interactive message according to the present invention. A difference between this embodiment and the embodiment illustrated in FIG. 2 lies in that this embodiment is an extension of the embodiment illustrated in FIG. 2. In addition to an IPTV system, other media playback platforms are also applicable to the technical solution provided in the present invention. A user terminal 30 may be one of various OTT (Over-The-Top) terminals, such as a PC terminal, a mobile phone terminal, and a PAD terminal An SNS server may be presented as another interactive server, such as instant communication server, an email server, or a microblog server. As long as the system provides corresponding friend list query and contact message query interfaces according to the present invention, the interactive system may be integrated, by using the present invention, into a media playback platform to support PIP display of a contact message of the system. The following details the system with reference to FIG. 5. The system mainly includes a user terminal 30, a media playback platform 32, a Mashup server 34, and various SNS systems such as an email server 40, a microblog server 42, and a blog service 44. The media playback platform 32 mainly includes a PIP interface 322 and an SNS PIP configurator 324. The SNS PIP 324 configurator is configured to save an SNS PIP configuration set by the user terminal 30, where the SNS PIP configuration mainly includes an SNS ID preset by the user terminal 30, whether to enable PIP, and an SNS user name and password. Optionally, the SNS PIP configuration may further include an SNS PIP friend list which indicates only a part of friends followed by the user terminal 30. Optionally, the SNS PIP configuration may further include a message browsing duration, which is used for automatically closing a PIP window each time a display duration of the PIP window on the user terminal reaches the message browsing duration. After the Mashup server 34 detects a contact message, the media playback platform 12 invokes the PIP interface 322 and displays the SNS contact message in a PIP window on the user terminal 30 by using the PIP interface 322 without affecting normal media playback for the user.

FIG. 6 is a flowchart of a method for displaying an interactive message according to the present invention. This embodiment describes a process of displaying an interactive message on a media playback platform.

Step S401: Receive SNS PIP configuration information set by a user terminal.

Step S402: Automatically log in to a corresponding SNS server.

Step S403: Acquire a user contact message by detecting the SNS server.

Step S404: Parse the contact message.

Step S405: Display the contact message on the user terminal by invoking a PIP interface.

In an embodiment provided in the present invention, before the acquiring SNS PIP configuration information, the method further includes: receiving SNS PIP configuration information input by the user terminal, where the SNS PIP configuration information includes a social network site identifier (SNS ID) and corresponding SNS user name and password, and the SNS user name and password are used to automatically log in to an SNS system corresponding to the SNS ID.

In an embodiment provided in the present invention, an EPG server or the media playback platform logs in to and detects the SNS server by using the Mashup server based on the mashup (Mashup) technology.

In an embodiment provided in the present invention, before the acquiring SNS PIP configuration information, the method further includes: receiving SNS PIP configuration information input by the user terminal, where the SNS PIP configuration information further includes an SNS PIP friend list, and the SNS PIP friend list includes an SNS contact that is selected and configured by the user terminal and needs to be followed; and acquiring a message only from a contact in the SNS PIP friend list.

In an embodiment provided in the present invention, the parsing the contact message includes: parsing the contact message and identifying text content, or a video link included in the contact message. The PIP interface provided by the EPG server or the media playback platform is invoked and the text message is displayed in the PIP window on the user terminal; or video content is acquired by using the video link and the video content is displayed in the PIP window on the user terminal by invoking the PIP interface provided by the media playback platform. In a PIP scenario, the PIP interface is configured to play a video, not audio; in a PIG scenario, the PIP interface is configured to play audio and a video at the same time.

In an embodiment provided in the present invention, before the acquiring SNS PIP configuration information, the method further includes: receiving SNS PIP configuration information input by a user, where the SNS PIP configuration information further includes a message browsing duration, which is used for automatically closing the PIP window each time a display duration of the PIP window on the user terminal reaches the message browsing duration.

In an embodiment of the present invention, an instruction that is used for switching between large and small streams and input by a user terminal is received and the contact message displayed in the PIP window is switched to the main window on the user terminal for display.

In the forgoing embodiments provided in the present invention, the user terminal includes a personal computer (PC) terminal, a mobile phone terminal, or a personal digital assistant (PDA) terminal, and the SNS server includes an instant communication server, an email server, or a microblog server.

According to the present invention, a Mashup server is used for interconnection with various SNS servers. Advantages of this solution are as follows: The system has great scalability; and different terminals can interconnect with a background SNS server by using unified interfaces, and different user terminals do not need to interconnect with multiple interactive systems, which features simple implementation. In a same way, a manner in which a user terminal directly interconnects with an interactive system may also be used, and related PIP configurations (an ID of the interactive system, a user name and password, a message browsing duration, a friend list, and the like) are completely stored on a local position of the user terminal. The terminal only needs to interconnect with an external system because of low coupling on a system side.

A person of ordinary skill in the part may understand that the method for displaying an interactive message in the forgoing embodiments may be implemented by a program instructing relevant hardware. The program may be stored in a readable storage medium (such as ROM/RAM, magnetic disk and optical disk). When the program runs, corresponding steps in the method are performed.

The foregoing descriptions are merely exemplary embodiments of the present invention. It should be noted that a person of ordinary skill in the part may make certain improvements or polishing without departing from the principle of the present invention and such improvements or polishing should fall within the protection scope of the present invention.

## Claims

1. A method for displaying an interactive message, comprising:
acquiring social network site picture in picture (SNS PIP) configuration information;
logging in to a social network site (SNS) server according to the SNS PIP configuration information;
acquiring a user contact message by detecting the SNS server;
parsing the contact message; and
displaying the contact message in a PIP window on a user terminal by invoking a picture in picture (PIP) interface provided by a media playback platform.

2. The method according to claim 1, wherein before the acquiring SNS PIP configuration information, the method further comprises:
receiving the SNS PIP configuration information input by the user terminal, wherein the SNS PIP configuration information comprises a social network site identifier (SNS ID) and corresponding SNS user name and password, and the SNS user name and password are used to automatically log in to an SNS system corresponding to the SNS ID.

3. The method according to claim 1, wherein the SNS server is logged in to and detected based on a mashup (Mashup) technology and by using a Mashup server.

4. The method according to claim 2, wherein before the acquiring SNS PIP configuration information, the method further comprises:
receiving the SNS PIP configuration information input by the user terminal, wherein the SNS PIP configuration information further comprises an SNS PIP friend list, and the SNS PIP friend list comprises an SNS contact that is selected and configured by the user terminal and needs to be followed.

5. The method according to claim 4, wherein the acquiring a user contact message by detecting the SNS server comprises:
acquiring only a message from a corresponding contact in the SNS PIP friend list by detecting the SNS server.

6. The method according to any one of claims 1 to 5, wherein the parsing the contact message comprises:
parsing the contact message to identify text content, or a video link comprised in the contact message.

7. The method according to claim 6, wherein the displaying the contact message in a PIP window on a user terminal by invoking a PIP interface provided by a media playback platform comprises:
invoking the PIP interface provided by the media playback platform and displaying the text message in the PIP window on the user terminal; or
acquiring video content by using the video link, and displaying the video content in the PIP window on the user terminal by invoking the PIP interface provided by the media playback platform.

8. The method according to claim 7, wherein the displaying the video content in the PIP window on the user terminal by invoking the PIP interface provided by the media playback platform comprises that:
in a PIP scenario, the PIP interface is configured to play a video, not audio, ; and
in a PIG scenario, the PIP interface is configured to play audio and a video at the same time.

9. The method according to claim 2, wherein before the acquiring SNS PIP configuration information, the method further comprises:
receiving the SNS PIP configuration information input by the user terminal, wherein the SNS PIP configuration information further comprises a message browsing duration, which is used for automatically closing the PIP window each time a display duration of the PIP window on the user terminal reaches the message browsing duration.

10. The method according to claims 1 to 3, 6 or 9, further comprising:
receiving an instruction for switching between large and small streams and switching the contact message displayed in the PIP window to a main window on the user terminal for display, wherein the instruction is input by the user terminal.

11. The method according to claim 1, wherein the user terminal may be a personal computer (PC) terminal, a mobile phone terminal, or a personal digital assistant PDA terminal.

12. The method according to claim 1, wherein the SNS server comprises an instant communication server, an email server, or a microblog server.

13. An apparatus for displaying an interactive message, comprising:
an apparatus for acquiring social network site picture in picture (SNS PIP) configuration information;
an apparatus for logging in to a social network site (SNS) server according to the SNS PIP configuration information;
an apparatus for acquiring a user contact message by detecting the SNS server;
an apparatus for parsing the contact message; and
an apparatus for displaying the contact message in a PIP window on a user terminal by invoking a picture in picture (PIP) interface provided by a media playback platform.

14. The apparatus according to claim 13, wherein the SNS PIP configuration information comprises a social network site identifier (SNS ID) and corresponding SNS user name and password, and the SNS user name and password are used to automatically log in to an SNS system corresponding to the SNS ID.

15. The apparatus according to claim 14, wherein the SNS PIP configuration information further comprises an SNS PIP friend list, and the SNS PIP friend list comprises an SNS contact that is selected and configured by the user terminal and needs to be followed.

16. The apparatus according to claim 13, wherein the SNS PIP configuration information further comprises a message browsing duration, which is used for automatically closing the PIP window each time a display duration of the PIP window on the user terminal reaches the message browsing duration.

17. A system for displaying an interactive message, comprising: an electronic program menu (EPG) server, a set top box (STB), and a mashup (Mashup) server, wherein:
the EPG server is configured to store social network site picture in picture (SNS PIP) configuration information set by a user terminal and configured to log in to one or more SNS servers according to the SNS PIP configuration information by using the Mashup server;
the Mashup server is configured to detect a contact message on an SNS server and pushes the detected contact message to the EPG server, and the EPG server parses the contact message and invokes a PIP interface provided by the STB to request display of the contact message; and
the STB is configured to display the contact message for a user in a PIP window on the user terminal.

18. The system according to claim 17, wherein the SNS PIP configuration information comprises a social network site identifier (SNS ID) and corresponding SNS user name and password, and the SNS user name and password are used by the Mashup server to automatically log in to an SNS system corresponding to the SNS ID.

19. The system according to claim 18, wherein the SNS PIP configuration information further comprises an SNS PIP friend list, the SNS PIP friend list comprises an SNS contact that is selected and configured by the user terminal and needs to be followed, and the Mashup server detects the SNS server to acquire a message only from a corresponding friend in the SNS PIP friend list.

20. The apparatus according to claim 18, wherein the SNS PIP configuration information further comprises a message browsing duration, which is used for automatically closing the PIP window each time a display duration of the PIP window on the user terminal reaches the message browsing duration.

21. A system for displaying an interactive message, comprising: a media playback platform and a mashup (Mashup) server, wherein the media playback platform further comprises: a picture in picture (PIP) interface and a social network site picture in picture (SNS PIP) configurator;
the SNS PIP configurator on the media playback platform is configured to store SNS PIP configuration information set by a user terminal and is used by the media playback platform to automatically log in to one or more SNS servers according to the SNS PIP configuration information by using the Mashup server; and
the Mashup server is configured to detect a contact message from the SNS server in real time or regularly and pushes the detected contact message to the media playback platform, and the media playback platform parses the contact message and invokes a PIP interface provided by the media playback platform to request display of the contact message.

22. The system according to claim 21, wherein the SNS PIP configuration information comprises a social network site identifier (SNS ID) and corresponding SNS user name and password, and the SNS user name and password are used to automatically log in to an SNS system corresponding to the SNS ID.

23. The system according to claim 22, wherein the SNS PIP configuration information further comprises an SNS PIP friend list, and the SNS PIP friend list comprises an SNS contact that is selected and configured by the user terminal and needs to be followed.

24. The system according to claim 22, wherein the SNS PIP configuration information further comprises a message browsing duration, which is used for automatically closing a PIP window each time a display duration of the PIP window on the user terminal reaches the message browsing duration.
